# EUROPÄISCHE PATENTANMELDUNG

(11) **EP 4 322 036 A1**
(43) Veröffentlichungstag der Anmeldung: **14.02.2024**
(21) Anmeldenummer: 23183542.2
(22) Anmeldetag: 05.07.2023
(51) Int. Cl.: G06F 21/57

(54) **VERFAHREN ZUM BOOTEN EINER ELEKTRONISCHEN STEUEREINHEIT**

(30) Priorität: 01.08.2022 DE 102022207941
(71) Anmelder: Robert Bosch GmbH, 70442 Stuttgart (DE)
(72) Erfinder: Pai, Gautam, 70499 Stuttgart (DE); Pandit, Prajakta, 70499 Stuttgart (DE)

(57) **Zusammenfassung**

Verfahren zum Booten einer elektronischen Steuereinheit (Electronic Control Unit, ECU) (5), wobei die ECU (5) einen Host (12) umfasst, der mit einem Hardware-Sicherheitsmodul (Hardware Security Module, HSM) (10) interagiert, wobei wenigstens eine Softwarekomponente durch das HSM (10) geprüft wird, der Host (12), falls eine Manipulation erkannt wird, eine Anforderung an das HSM (10) sendet, zu prüfen, ob die Manipulation erfolgt ist, der Host entscheidet, ob ein Eingriff erforderlich ist.

## Beschreibung

Die Erfindung stellt ein Verfahren zum Booten einer elektronischen Steuereinheit (Electronic Control Unit, ECU) und eine Anordnung zum Durchführen des besagten Verfahrens bereit.

### Stand der Technik

Eine elektronische Steuereinheit (ECU) ist ein beispielsweise in Automobilelektronik verwendetes eingebettetes System, das ein oder mehrere elektrische Systeme in einem Kraftfahrzeug steuert. Booten ist der Prozess des Startens eines Computers, eingeleitet durch Hardware. Das Booten umfasst typischerweise den Schritt des Ladens von Software in einen Speicher, bevor diese ausgeführt werden kann.

Derzeit unterstützt ein Hardware-Vertrauensanker (Hardware Trust Anchor, HTA) einen Satz von Boot-Optionen, um sicherzustellen, dass nur authentifizierte Software auf einem Host ausgeführt wird. Das sogenannte Hardware-Sicherheitsmodul (Hardware Security Module, HSM) ist eine weit verbreitete Vertrauenswurzel (Root of Trust, RoT) in der Automobilindustrie. Das HSM bildet eine vertrauenswürdige Komponente in der ECU.

Eine HSM-Softwarekomponente wird gesichert, um die Integrität und Vertraulichkeit von zugehörigen Daten und Code zu erhalten. Somit ist die Ausführung von HSM-Software auf der ECU vertrauenswürdig. Dieses Vertrauen muss auf den Host (Anwendungssoftwarekomponente) erweitert werden, um sicherzustellen, dass nur authentifizierter Code auf der ECU ausgeführt wird. Falls eine nicht-authentische Software erkannt wird, können Fehlerstrategien definiert werden, um den Schaden einzugrenzen. Dieses Vertrauen kann auf zweierlei Art und Weise erweitert werden:
i. Host-Sicherheitsmechanismen: Schutzmechanismen können in der Host-Softwarekomponente eingerichtet werden, um dafür zu sorgen, dass der Code gesichert und vertrauenswürdig ist. Einige dieser Mechanismen beinhalten, dass die Softwarekomponente einmalig programmierbar (One-Time-Programmable, OTP) gemacht wird, wodurch die Softwarekomponente passwortgeschützt ist, was sicherstellt, dass keine Schreibvorgänge etc. durchgeführt werden können.
ii. HSM-Sicherheitsmechanismen: Die kryptografischen Algorithmen im HSM werden verwendet, um die Authentizität und Integrität der Softwarekomponenten vor Ausführung zu verifizieren. Dies beinhaltet Interaktionen zwischen dem Host und dem HSM, um sicherzustellen, dass der Code immer sicher ausgeführt wird. Dieser Mechanismus bewirkt einen Kompromiss in Form einer längeren Boot-Zeit. Dies ist darauf zurückzuführen, dass der Host warten muss, bis er eine positive Antwort vom HSM erhält, wodurch die Sicherheit der Softwarekomponenten sichergestellt wird. Dies hat eine längere Boot-Zeit der ECU zur Folge.

Die Boot-Sequenzen, die verschiedene Interaktionen zwischen dem Host und dem derzeit verfügbaren und/oder implementierten HSM beinhalten, sind:
i. Secure Boot (Sicheres Booten): Die HSM-Softwarekomponente ist der erste Code, der auf der ECU ausgeführt wird und der vertrauenswürdig ist. Das HSM beginnt damit, die Sicherheit von auf den Host geflashten Softwarekomponenten zu verifizieren. Der Host kann nur starten, wenn das HSM die Integrität und Authentizität aller Softwarekomponenten verifiziert hat. Der Host ist nicht an diesen Prüfungen beteiligt, und das HSM führt diese unabhängig und obligatorisch durch. Die durch diesen Mechanismus bereitgestellte Sicherheit ist zwar signifikant, sie hat aber auch eine längere ECU-Boot-Zeit zur Folge.
ii. Trusted Boot (Vertrauenswürdiges Booten): Die HSM-Softwarekomponente ist der erste Code, der auf der ECU ausgeführt wird und der vertrauenswürdig ist. Das HSM beginnt damit, die Sicherheit der auf den Host geflashten vorkonfigurierten Softwarekomponenten zu verifizieren. Der Host kann nur starten, wenn das HSM die Integrität und Authentizität einiger der Softwarekomponenten verifiziert hat. Der Host kann sich später dafür entscheiden, die Sicherheit verbleibender Softwarekomponenten zu verifizieren. Somit ist die Sicherheit nicht so bemerkenswert wie bei Verwendung von Secure Boot (Sicheres Booten). Allerdings wird der Boot-Vorgang der ECU verkürzt, da das HSM nicht die Sicherheit aller Softwarekomponente verifiziert.
iii. Authenticated Boot (Authentifiziertes Booten): Das HSM und der Host (vertrauenswürdige Softwarekomponente) starten parallel. Damit diese Startsequenz funktioniert, muss die erste Softwarekomponente, die auf dem Host startet, wie vorstehend erwähnt durch Schutzmechanismen gesichert sein. Sobald das HSM vollständig bootet, stellt der Host eine Anfrage an das HSM und gibt die Anwendungen frei, nachdem eine Bestätigung vom HSM zur Sicherheit der Software erhalten wurde. Das HSM führt keinerlei Prüfungen unabhängig durch. Somit liegt die Verantwortung für die Sicherstellung der Sicherheit beim Host und entsprechend auch das Anfragen beim HSM zum Verifizieren der Softwarekomponenten.
iv. Autonomous Boot (Autonomes Booten): Der Host und das HSM können parallel starten. Die erste Softwarekomponente, die auf dem Host ausgeführt oder gestartet werden soll, ist durch den Sicherheitsmechanismus auf dem Host geschützt (OTP, schreibgeschützt, Passwortschutz ...). Das HSM verifiziert vordefinierte Softwarekomponenten, bevor dem Host erlaubt wird, Anwendungen freizugeben. Der einzige Unterschied zwischen diesem Mechanismus und dem authentifiziertes Booten (Authenticated Boot) besteht darin, dass das HSM nicht vollständig gebootet sein muss. Bevor das HSM vollständig bootet, verifiziert es die Sicherheit vordefinierter Softwarekomponenten. Das HSM führt die Prüfungen eigenständig, ohne explizite Anfrage vom Host, für die vordefinierten Softwarekomponenten durch. Somit reduziert sich die Boot-Zeit der ECU im Vergleich zur Option Authenticated Boot (Authentifiziertes Booten).

Das sichere Booten (Secure Boot) bietet die bessere Lösung, was die Sicherheit angeht, aber die Boot-Zeit der ECU ist üblicherweise inakzeptabel in der Automobilindustrie, wo die Boot-Zeit ein entscheidender Parameter ist. Somit ist dies keine günstige Option.

Das vertrauenswürdiges Booten (Trusted Boot) stellt die Sicherheit der definierten Softwareteile sicher, und eine serielle Ausführung gewährleistet außerdem eine gute Boot-Zeit der ECU, verglichen mit dem sicheren Booten. Allerdings ist die gebotene Sicherheit nicht ausreichend, da einige Softwarekomponenten unverifiziert und unauthentifiziert bleiben können.

Das authentifizierte Booten (Authenticated Boot) und das autonome Booten (Autonomous Boot) stellen einen Kompromiss zwischen der Sicherheit und der Boot-Zeit der ECU bereit, indem eine parallele Boot-Sequenz geboten wird. Das authentifizierte Booten (Authenticated Boot) verlagert die Aufgabe der Verifizierung auf den Host, wohingegen das HSM intermittierend am autonomen Booten (Autonomous Boot) beteiligt ist. Trotz dieses Kompromisses ist die bei diesen Strategien gebotene Boot-Zeit aus Sicht eines Erstausrüsters (Original Equipment Manufacturer, OEM) nach wie vor inakzeptabel. Dies macht es schwierig, eine ausreichend sichere Boot-Lösung mit einer annehmbaren Boot-Zeit der ECU zu erzielen.

### Offenbarung der Erfindung

Gemäß der Erfindung wird ein Verfahren zum Booten einer ECU gemäß Anspruch 1 vorgestellt.

Des Weiteren wird eine Anordnung gemäß Anspruch 10 vorgestellt, die sich für das Durchführen des Verfahrens eignet.

Das vorgeschlagene Verfahren ist für das Booten einer elektronischen Steuereinheit (Electronic Control Unit, ECU) vorgesehen, wobei die ECU einen Host umfasst, der mit einem Hardware-Sicherheitsmodul (Hardware Security Module, HSM) interagiert, wobei wenigstens eine auszuführende Softwarekomponente durch das HSM geprüft wird, da es die sichere Vertrauenswurzel (Root of Trust, RoT) ist.

Falls eine Manipulation erkannt wird, sendet der Host eine Anforderung an das HSM, zu prüfen, ob die Manipulation erfolgt ist. Eine Manipulation kann beispielsweise durch Prüfen einer Bitänderung im Speicheradressbereich erkannt werden, indem eine Prüfsumme an der entsprechenden Adresse etc. der wenigstens einen Softwarekomponente geprüft wird. Das bedeutet, dass das HSM die Authentizität und Integrität der wenigstens einen Softwarekomponente prüft. Dann entscheidet der Host, ob ein Eingriff erforderlich ist.

In einer Ausführungsform stellt der Host eine Anfrage an das HSM, die Integritätsprüfungen der betroffenen Softwarekomponente neu zu berechnen.

Des Weiteren kann, falls eine Manipulation erkannt wird, der Host eine Markierung (Flag) setzen. Bei diesem Flag kann es sich um einen Array-Wert handeln.

Das Setzen eines Flag-Werts als Array ist eine der beispielhaften Lösungen zum Dokumentieren einer Manipulationserkennung. Andere Mechanismen beinhalten andere Software- und/oder Hardwarelösungen wie das Verwenden von Hardwareregistern, um die Manipulationsinformationen zu notieren, das Verwenden eines ungültigen Markers, um anzuzeigen, dass die Software erneut geprüft werden sollte, etc. Daher kann im Grunde jede Art von Indikationsmechanismus von der Hostseite verwendet werden oder eine Mitteilung von der Anwendungs- an die Boot-Software hinsichtlich der Manipulation.

Der Host kann Verifizierungsergebnisse einer Laufzeit-Manipulationserkennung (Run-Time Manipulation Detection, RTMD) vom HSM anfordern. Der Host fordert nur RTMD-Verifizierungsergebnisse vom HSM an. Das HSM führt die RTMD aus. Dies kann in vordefinierten Intervallen automatisch durch das HSM erfolgen, ohne Eingriff seitens des Hosts, sobald sich das HSM im HSM-Anwendungsmodus befindet.

Das Verfahren ermöglicht das Reduzieren der Boot-Zeit der ECU und das Sicherstellen der Sicherheit durch eine deterministische "Authenticated Boot"-Erweiterung.

Eine Weiterentwicklung der "Authenticated Boot"-Sequenz wird vorgeschlagen, die dem Host hilft, eine fundierte Entscheidung zu treffen, ob das HSM während des Boot-Vorgangs zur Verifizierung einbezogen werden soll oder nicht. Diese organisierte und fundierte Entscheidungsfindung auf der Hostseite reduziert die Boot-Zeit der ECU aufgrund einer geringeren HSM-Beteiligung und sorgt gleichzeitig für Sicherheit, damit eine Ausführung manipulierter Software im aktuellen und/oder nächsten Fahrzyklus basierend auf den Fehlerstrategien verhindert wird.

Die hier beschriebene Anordnung eignet sich zum Durchführen des vorgeschlagenen Verfahrens. Die Anordnung kann in Hardware und/oder Software implementiert werden. Darüber hinaus kann die Anordnung in eine elektronische Steuereinheit (Electronic Control Unit, ECU) integriert werden oder, in einer Ausführungsform, eine ECU sein.

### Kurzbeschreibung der Zeichnungen

Figur 1 zeigt ein Flussdiagramm, das eine "Authenticated Boot"-Sequenz veranschaulicht.

Figur 2 zeigt ein Flussdiagramm, das eine deterministische "Authenticated Boot"-Sequenz veranschaulicht.

Es versteht sich, dass die vorstehend erwähnten Merkmale und diejenigen, die nachfolgend beschrieben werden, nicht nur in der spezifizierten Kombination verwendet werden können, sondern auch in anderen Kombinationen oder für sich, ohne vom Schutzbereich der Erfindung abzuweichen.

Die Erfindung wird in den Zeichnungen mittels beispielhafter Ausführungsformen diagrammatisch veranschaulicht und nachstehend unter Bezugnahme auf die Zeichnungen erläutert. Es versteht sich, dass die Beschreibung den Schutzbereich der vorliegenden Erfindung in keiner Weise einschränkt und lediglich eine Veranschaulichung von Ausführungsformen der Erfindung ist.

### Beschreibung der Ausführungsformen

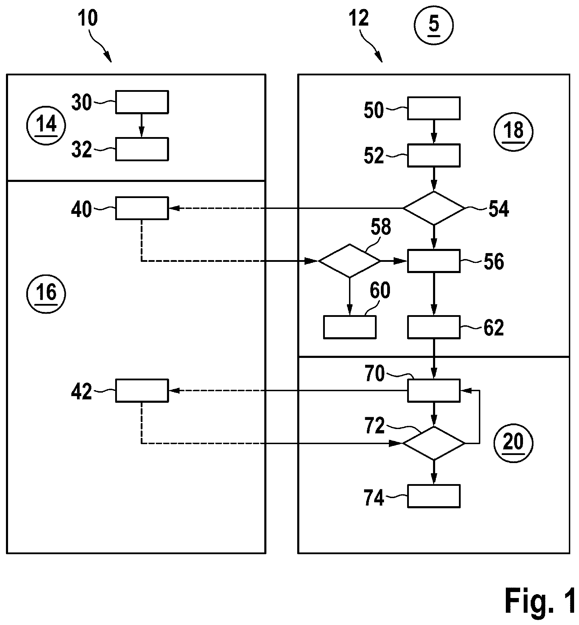

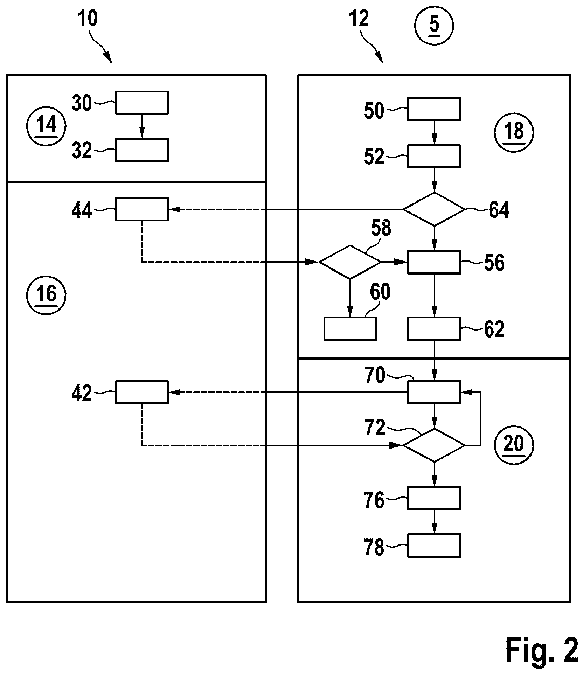

Die bestehende "Authenticated Boot"-Sequenz wird in Figur 1 gezeigt. Die Zeichnung zeigt auf der linken Seite das HSM 10 und auf der rechten Seite den Host 12 als Komponenten einer ECU 5. Des Weiteren zeigt Figur 2 die Blöcke HSM-Boot 14, HSM-Anwendung 16, Host-Boot 18 und Host-Anwendung 20. Es ist zu berücksichtigen, dass der Host 12 und das HSM 10 parallel arbeiten, insbesondere bei Ausführung parallel starten.

Die Schritte beim HSM-Boot 14 lauten:

| | |
|---|---|
| Schritt 30 | HSM-Kern starten |
| Schritt 32 | HSM-Boot abgeschlossen |

Die Schritte in der HSM-Anwendung lauten:

| | |
|---|---|
| Schritt 40 | definierte Anwendungen verifizieren |
| Schritt 42 | Verifizierungsergebnis von RTMD logischer Blöcke |

Die Schritte beim Host-Boot 18 lauten:

| | |
|---|---|
| Schritt 50 | Host-Boot-Steuerung starten |
| Schritt 52 | Initialisierung |
| Schritt 54 | Sicherheit der Software prüfen |

Falls die Sicherheit der entsprechenden Softwarekomponente geprüft werden muss, mit 40 fortfahren. Andernfalls mit Schritt 56 fortfahren.

| | |
|---|---|
| Schritt 56 | RTMD starten |
| Schritt 58 | Ergebnis von Schritt 40 prüfen |

Falls dies OK ist, mit Schritt 56 fortfahren. Andernfalls mit Schritt 60 fortfahren.

| | |
|---|---|
| Schritt 60 | Fehlerstrategie |
| Schritt 62 | Zu Host-Anwendung 20 springen |

Die Schritte in der Host-Anwendung 20 lauten:

| | |
|---|---|
| Schritt 70 | RTMD-Verifizierungsergebnisse |
| Schritt 72 | Ergebnis? |

Schritt 70 in der Host-Anwendung 20 ruft Schritt 42 in der HSM-Anwendung 16 auf. Falls das Ergebnis OK ist, mit Schritt 70 fortfahren. Andernfalls mit Schritt 74 fortfahren.

| | |
|---|---|
| Schritt 74 | Fehlerstrategie. |

Die Schritte 54 und 74 in der in Figur 1 gezeigten "Authenticated Boot"-Sequenz zeigen die Positionen in der Sequenz, an denen das vorgeschlagene Verfahren Änderungen bzw. Verbesserungen bietet.

Dieser Vorschlag ist eine Erweiterung zur "Authenticated Boot"-Sequenz, an der Host- und HSM-Kerne beteiligt sind. Ziel ist es, die Boot-Zeit der ECU
zu reduzieren und für Sicherheit zu sorgen.

Die Laufzeit-Manipulationserkennung (Run-Time Manipulation Detection, RTMD) ist eine bestehende HSM-Anwendung, welche die konfigurierte Softwarekomponentenblöcke in definierten Zeitintervallen überwacht und in der HSM-Anwendung ausgeführt wird, wobei die Informationen/Ergebnisse vom Host verwendet werden. Falls eine Manipulation vom HSM im Anwendungsmodus des Hosts erkannt wird, besteht der Vorschlag darin, den Flag-Status beizubehalten, um diese Manipulation anzuzeigen. Host und HSM können beide in zwei Modi betrieben werden, Boot-Modus und Anwendungsmodus. Der Boot-Modus des Hosts ist Software, was nur ausreicht, um anfängliche Prüfungen durchzuführen, und ist üblicherweise beim Aktualisieren und Neuflashen neuer Software erforderlich. Es wird davon ausgegangen, dass das Fahrzeug stillsteht, wenn sich der Host im Boot-Modus befindet. Der Host-Anwendungsmodus liegt dann vor, wenn die eigentliche Software ausgeführt wird und sich das Fahrzeug im Fahrmodus befindet und die ECU-Merkmale aktiv sind. Das HSM erlaubt im Boot-Modus nur einen minimalen Satz von Merkmalen, da das vollwertige HSM im HSM-Anwendungsmodus verfügbar ist.

Jedem Softwareblock kann eine Block-ID zugewiesen sein. Das Flag kann als ein Array mit Indexwert gesehen werden, das die Softwareblock-ID angibt, und der Wert gibt an, ob eine Manipulation für einen entsprechenden Block erkannt wird oder nicht. Ein für den Index eingestellter Wert weist auf eine Manipulationserkennung hin, und dementsprechend gibt ein Wert Null an, dass keine Manipulation erkannt wurde.

Während des ECU-Boot-Prozesses kann die Host-Boot-Implementierung diese Flag-Werte auswerten, um zu prüfen, ob eine Manipulation registriert wurde. Bei den aktuellen Optionen wird die Boot-Zeit der ECU erhöht, da der Host immer eine HSM-Beteiligung erfordert, um entweder eine Echtzeitberechnung oder eine Verifizierung des letzten Ergebnisses und einen Vergleich durchzuführen. In diesem Vorschlag würde, wie bei der deterministischen "Authenticated Boot"-Sequenz in Figur 2 gezeigt, der Host zuerst nur prüfen, falls ein Manipulations-Flag gesetzt ist.

Im Vergleich zu Figur 1 zeigt Figur 2 die folgenden Schritte:
In der HSM-Anwendung 16:

| | |
|---|---|
| Schritt 44 | [i]te Anwendung verifizieren |

Beim Host-Boot 18:

| | |
|---|---|
| Schritt 64 | Manipulation erkannt |

In diesem Fall mit Schritt 44 fortfahren. Andernfalls mit Schritt 56 fortfahren.
In der Host-Anwendung 20:

| | |
|---|---|
| Schritt 76 | Reaktionsmanipulation erkannt [i] = 1 |
| Schritt 78 | entsprechende Fehlerstrategie |

Da diese Flag-Einstellung und Erkennung im Anwendungsmodus erfolgt, bleibt die Boot-Zeit der ECU von dieser Aktion unbetroffen. Wenn die ECU bootet, sollte der Host-Kern nur das von der Anwendung gesetzte Flag verifizieren, ohne irgendeine Beteiligung des HSM, falls keine Manipulation erkannt wird. Somit würde, in einem normalen Szenario, wenn von keinem Sicherheitsangriff ausgegangen wird, ein Host-Boot nur auf Boolesche Flag-Werte prüfen, ohne HSM-Eingriff, und nach dem Wechsel in den Anwendungsmodus wäre das HSM auf jeden Fall an der Durchführung der Erkennung in Form von RTMD beteiligt. Falls eine Manipulation im Anwendungsmodus erkannt wird, wird das Flag für den entsprechend betroffenen Block gesetzt.

Dies wird dann vom Host während des Bootens verifiziert. Somit kann der Host, im Szenario eines Sicherheitsangriffes, eine fundierte Entscheidung treffen und das HSM einbeziehen, um eine Echtzeitberechnung des manipulierten Blocks durchzuführen, da das Flag aus den Informationen der Block-ID besteht. Basierend auf dem Verifizierungsergebnis kann die entsprechende Fehlerstrategie 78 umgesetzt werden.

Das vorgeschlagene Verfahren würde nicht in den Boot-Prozess der ECU eingreifen, falls kein Sicherheitsangriff erkannt wird. Somit erfolgt, ohne Auswirkung auf die Boot-Zeit, dennoch eine Überwachung auf Sicherheitsangriffe im Anwendungsmodus des Hosts. Basierend auf dieser Auswertung stellt der vorgeschlagene Ansatz sicher, dass die Boot-Zeit der ECU intakt bleibt, und bietet gleichzeitig das Sicherheitsniveau von Authenticated Boot (Authentifiziertes Booten).

In Bild 2 bezeichnet Manipulation erkannt (Schritt 64) ein Flag, das im Host gesetzt werden muss, sobald eine Manipulation erkannt wird. Dieses Flag kann als Array-Wert gezeigt werden, um die Speicherung der Manipulationserkennung der verschiedenen Softwareblöcke anzugeben. Somit hat der Host, falls eine Manipulation erkannt wird, dank der Softwareblock-Informationen jetzt die Möglichkeit, beim HSM anzufragen, die Integritätsprüfungen des betroffenen Softwareblocks neu zu berechnen.

Jedem Softwareblock ist eine Kennung (ID) zugewiesen. Das gesetzte Flag entspricht dieser ID. Falls also eine Manipulation für den Softwareblock mit der ID 2 erkannt wird, weiß der annehmende Boot-Host, dass Softwarekomponente 2 erneut vom HSM geprüft werden muss.

In normalen Szenarien, wenn kein Sicherheitsangriff erfolgt ist, bleibt das Flag unverändert. Somit wird dem Host verständlich gemacht, dass der HSM-Eingriff während des Boot-Vorgangs nicht erforderlich ist. Bei den wie vorstehend beschriebenen derzeit verfügbaren Optionen wird, unabhängig vom Auftreten eines Sicherheitsereignisses, ein HSM-Eingriff durchgeführt. Somit erhöht sich die Boot-Zeit der ECU. Bei diesem Vorschlag wird in Szenarien, in denen kein Sicherheitsereignis erkannt wird, der HSM-Eingriff übersprungen, sodass der Boot-Vorgang hiervon unberührt bleibt.

Das vorgeschlagene Verfahren konzentriert die Sicherheit während des ECU-Boot-Vorgangs und die ECU-Boot-Zeit. Sobald jedoch, wie in Figur 2 gezeigt, die Manipulation in der Host-Anwendung der ECU erkannt wurde, kann eine entsprechende Fehlerstrategie 78 umgesetzt werden. Dies dient dazu, Verzögerungen beim Treffen von Sicherheitsmaßnahmen zur Boot-Zeit zu vermeiden und Maßnahmen umgehend zu ergreifen, sobald das Sicherheitsereignis erkannt wurde. Einige der Fehlerstrategien können darin bestehen, einen diagnostischen Störungscode (Diagnostic Trouble Code, DTC) auszulösen, eine Fehlermeldung auf einem CAN-Bus (CAN: Controller Area Network, Steuerungsnetz) zu senden, sicherheitskritische Informationen wie kryptografische Schlüssel zu sperren, den OEM zu benachrichtigen, indem Protokolldaten an eine telematische Steuereinheit (Telematic Control Unit, TCU) gesendet werden, die mit einem OEM-Backend verbunden ist, etc.

Eine andere Fehlerstrategie bestünde darin, den Fahrer über das Infotainment-System zu informieren und dafür zu sorgen, dass der Lastkraftwagen nur für einen bestimmten eingeschränkten Zeitraum fährt.

Allgemein kann das Verfahren in jeder ECU durchgeführt werden, die sicherheitsrelevant ist oder an Sicherheitsmaßnahmen wie einem Sicherheitsmechanismus beteiligt ist. Da diese ECUs in verschiedenen fahrzeuginternen Domänen eingesetzt werden können, wie etwa Antriebsstrang, Fahrgestell, Infotainment, zentrales Gateway etc., ist der vorgeschlagene Sicherheitsmechanismus für diese Produkte sehr vorteilhaft, insbesondere für ECUs mit strengen Anforderungen an die Boot-Zeit.

## Patentansprüche

1. Verfahren zum Booten einer elektronischen Steuereinheit (Electronic Control Unit, ECU) (5), wobei die ECU (5) einen Host (12) umfasst, der mit einem Hardware-Sicherheitsmodul (Hardware Security Module, HSM) (10) interagiert, wobei
- wenigstens eine Softwarekomponente durch das HSM (10) geprüft wird,
- falls eine Manipulation erkannt wird, der Host (12) eine Anforderung an das HSM (10) sendet, zu prüfen, ob die Manipulation erfolgt ist,
- der Host (12) entscheidet, ob ein Eingriff erforderlich ist.

2. Verfahren gemäß Anspruch 1, wobei eine Manipulation erkannt wird, indem eine Bitänderung im Speicheradressbereich der wenigstens einen Softwarekomponente geprüft wird oder indem eine Prüfsumme an einer entsprechenden Adresse geprüft wird.

3. Verfahren gemäß Anspruch 1 oder 2, wobei der Host eine Anfrage an das HSM (10) stellt, die Integritätsprüfungen der betroffenen Softwarekomponente neu zu berechnen.

4. Verfahren gemäß einem der Ansprüche 1 bis 3, wobei der Host (12),
falls eine Manipulation erkannt wird, ein Flag setzt.

5. Verfahren gemäß Anspruch 4, wobei das Flag ein Array-Wert ist.

6. Verfahren gemäß einem der Ansprüche 1 bis 5, wobei der Host (12) Verifizierungsergebnisse einer Laufzeit-Manipulationserkennung (Run Time Manipulation Detection, RTMD) vom HSM (10) anfordert.

7. Verfahren gemäß einem der Ansprüche 1 bis 6, wobei der Eingriff veranlasst, dass eine Fehlerstrategie durchgeführt wird.

8. Verfahren gemäß Anspruch 7, wobei die Fehlerstrategie eine Strategie ist, die aus einer Gruppe ausgewählt wird, bestehend aus: Auslösen eines diagnostischen Störungscodes (Diagnostic Trouble Code, DTC), Senden einer Fehlermeldung auf einem CAN-Bus, Sperren sicherheitskritischer Informationen wie kryptografische Schlüssel, Benachrichtigen des Produzenten durch Senden von Protokolldaten an eine telematische Steuereinheit (Telematic Control Unit, TCU), die mit einem Produzenten-Backend verbunden ist, Informieren des Fahrers über ein Infotainment-System und Veranlassen, dass der Lastkraftwagen nur für einen bestimmten eingeschränkten Zeitraum fährt.

9. Verfahren gemäß einem der Ansprüche 1 bis 8, wobei das HSM (10) einen kryptografischen Algorithmus verwendet, um die Integrität und Authentizität der wenigstens einen Softwarekomponente zu verifizieren.

10. Anordnung zum Booten einer ECU (5), wobei sich die Anordnung zum Durchführen eines Verfahrens gemäß einem der Ansprüche 1 bis 9 eignet.
